# EUROPEAN PATENT APPLICATION

(11) **EP 1 845 448 A2**
(43) Date of publication of application: **17.10.2007**
(21) Application number: 06255781.4
(22) Date of filing: 10.11.2006
(51) Int. Cl.: G06F 11/14

(54) **Storage system and data management method**

(30) Priority: 12.04.2006 JP 2006109366
(71) Applicant: Hitachi, Ltd., Chiyoda-ku Tokyo (JP)
(72) Inventor: Suzuki, Toru, c/o Hitachi, Ltd., Chiyoda-ku Tokyo 100-8220 (JP); Okumoto, Katsuhiro, c/o Hitachi, Ltd., Chiyoda-ku Tokyo 100-8220 (JP)
(74) Representative: Hodsdon, Stephen James

(57) **Abstract**

Journal - update history information (JNL VOL (P)) for a first volume (PVOL) - is created in a first storage apparatus (4) and sent to a second storage apparatus (5) and; in the second storage apparatus, the data written in the first volume and included in the received journal is copied to a second volume (SVOL), the journal is stored, a snapshot of the second volume is created at regular intervals or irregular intervals, the created snapshots are stored, and after that, in response to an external request, the first volume in the state as of a designated point-in-time is restored using the stored journal and snapshots.

## Description

This application relates to and claims priority from Japanese Patent Application No. 2006-109366, filed on April 12, 2006, the entire disclosure of which is incorporated herein by reference.

The present invention relates to a storage system and data management method, and is suitable for use in storage systems being able to backup data, for example, using a journal.

In conventional storage systems, volumes storing data read and written by users are fully backed up periodically, e.g., in a one-day to one-week cycle, or where a snapshot consisting of the data image of a volume as of a certain point in time is created periodically, e.g., in a twelve-hour to one-day cycle. This happens so that the volumes and the data therein can be restored using the backup data or snapshot difference data obtained as a result of the foregoing backup or snapshot creation.

Japanese Patent Laid-Open (Kokai) Publication No. 2005-115898 discloses a technique related to data backup using journal - update history information for the volumes read and written by users. Also, Japanese Patent Laid-Open (Kokai) Publication No. 2003-122509 discloses a technique related to data backup using remote copy.

However, with the foregoing data management method where data stored in volumes is fully backed up periodically, e.g., in a one-day to one-week cycle, or where a snapshot consisting of the data image of a volume as of a certain point in time is created periodically, e.g., in a twelve-hour to one-day cycle, a restoration-allowing point-in-time is set every twelve hours to one week, and it takes one to three hours to restore a volume.

Also, with conventional storage systems, the foregoing volume restore processing is performed in a storage apparatus having volumes for storing data read and written by users. However, there is a problem in that this volume restore processing places a considerable load on the storage apparatus and has adverse effects on any data input/output processing performed in response to requests for data input and output from a host system.

This invention was devised considering the foregoing points and aims to provide a storage system and data management method that enables shortening of intervals between restoration points-in-time, and execution of data restoration in a short period of time.

In order to preferably solve the foregoing problems, an aspect of this invention provides a storage system including a host system serving as a host computer, a first storage apparatus providing a first volume the host system reads/writes data from/to, and a second storage apparatus providing a second volume data written in the first volume is copied to. In this storage system, the first storage apparatus has a journal creation and transmission unit that creates journal, which is update history information for the first volume, and transmits it to the second storage apparatus. The second storage apparatus has: a data copy unit that copies the data written in the first volume and included in the journal transmitted from the first storage apparatus to the second volume; a journal-storing unit that stores each journal transmitted from the first storage apparatus; a snapshot creation unit that creates a snapshot of the second volume at regular intervals or irregular intervals; a snapshot-storing unit that stores the snapshots created by the snapshot creation unit; and a volume restoration unit that restores, in response to an external request, the first volume to its state as of the designated point-in-time using the journal stored in the journal-storing unit and the snapshots stored in the snapshot-storing unit.

Accordingly, with this storage system, by adjusting the time intervals for creating a snapshot in the second storage apparatus, it is possible to shorten the intervals between restoration-allowing points-in-time for the first volume. As a result, the time required for first volume restore processing can be reduced. Moreover, in this storage system, the first volume restore processing is performed in the second storage apparatus, so any adverse effects the restore processing may exert on the input and output of data in the first storage apparatus can be effectively prevented.

Another aspect of, this invention provides a data management method used for a storage system including a host system serving as a host computer, a first storage apparatus providing a first volume the host system reads/writes data from/to, and a second storage apparatus providing a second volume data written in the first volume is copied to. This methods includes: a first step where the first storage apparatus creates journal, which is update history information for the first volume, and transmits it to the second storage apparatus; a second step where the second storage apparatus copies the data written in the first volume and included in the journal transmitted from the first storage apparatus to the second volume, stores the journal, creates a snapshot of the second volume at regular intervals or irregular intervals, and stores the created snapshots; and a third step where the second storage apparatus restores, in response to an external request, the first volume to its state as of the designated point-in-time using the stored journal and snapshots.

Accordingly, with this data management method, by adjusting the time intervals for creating a snapshot in the second storage apparatus, it is possible to shorten the intervals between restoration-allowing points-in-time for the first volume. As a result, the time required in the first volume restore processing can be reduced. Moreover, with this data management method, the first volume restore processing is performed in the second storage apparatus, therefore, the adverse effects the restore processing may exert on the input and output of data in the first storage apparatus can be effectively prevented.

According to aspects of this invention, it is possible to provide a storage system and data management method that enables shortening of intervals between restoration-allowing points-in-time, and execution of data restoration in a short period of time.

### BRIEF DESCRIPTION OF THE DRAWINGS

Fig. 1 is a block diagram showing the overall structure of a storage system according to an embodiment of this invention;
Fig. 2 is a block diagram showing the simplified structure of a channel adapter;
Fig. 3 is a block diagram explaining shared memory in a primary-side storage apparatus;
Fig. 4 is a block diagram explaining shared memory in a secondary-side storage apparatus;
Fig. 5 is a conceptual diagram explaining a data management method for the storage system according to the embodiment of this invention;
Fig. 6 is a diagram showing a journal management table;
Fig. 7 is a diagram showing a first snapshot management table;
Fig. 8 is a diagram showing a second snapshot management table;
Fig. 9 is a flowchart explaining first snapshot creation processing;
Fig. 10 is a conceptual diagram explaining first snapshot creation processing;
Fig. 11 is a flowchart explaining second snapshot creation processing;
Fig. 12A to Fig.12C are conceptual diagrams explaining second snapshot creation processing;
Fig. 13 is a flowchart explaining first volume restore processing;
Fig. 14 is a flowchart explaining second volume restore processing;
Fig. 15 is a conceptual diagram explaining a restored volume management table;
Fig. 16 is a time chart explaining an allowed restoration time range display function.
Fig. 17 is a diagram showing an example of the display of the allowed restoration time range by a host system.

An embodiment of this invention is described below in detail with reference to the attached drawings.

### (1) Structure of Storage System according to this Embodiment

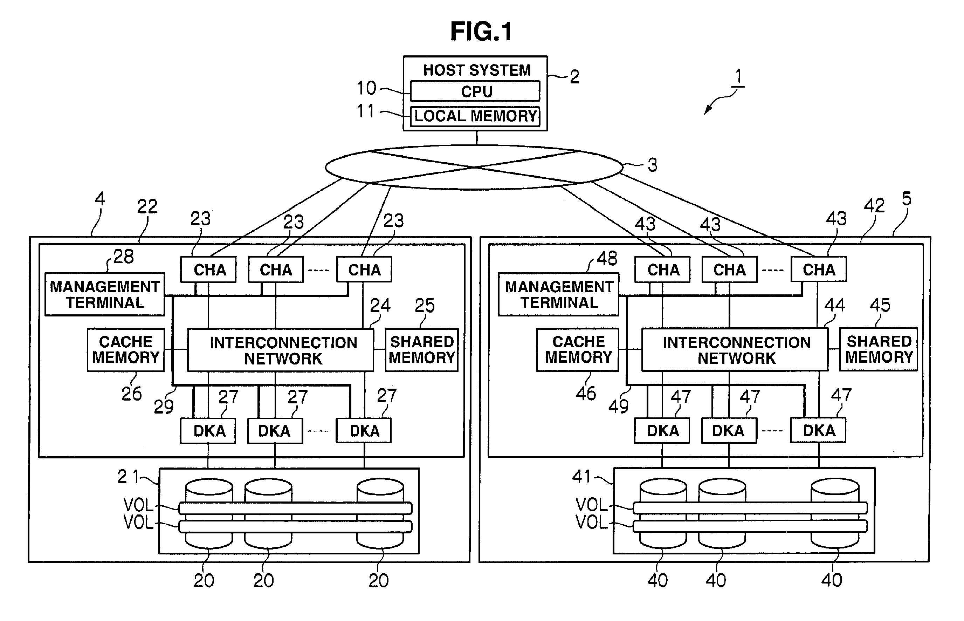

In Fig. 1, reference numeral 1 indicates the overall structure of a storage system according to this embodiment. The storage system 1 is configured by connecting a host system 2, serving as a host computer, to a primary-side storage apparatus 4 and secondary-side storage apparatus 5 via a network 3.

The host system 2 is a computer having information processing resources such as a CPU (Central Processing Unit) 10 and local memory 11 and is, e.g., a personal computer, work station, or main frame. The host system 2 also has information input devices (not shown in the drawing) such as a keyboard, switches, pointing devices, and microphones as well as information output devices (not shown in the drawing) such as a monitor display and speakers.

The network 3 is, e.g., a SAN (Storage Area Network), a LAN (Local Area Network), the Internet, public or private line. Communication between the host system 2, primary-side storage apparatus 4 and secondary-side storage apparatus 5 via this network 3 is performed according to Fibre Channel Protocol if the network 3 is a SAN and performed according to TCP/IP (Transmission Control Protocol/Internet Protocol) protocols if the network 3 is a LAN.

The primary-side storage apparatus 4 is structured having a disk device unit 21 consisting of a plurality of disk devices 20 and a controller 22 that controls the respective disk devices 20.

Each disk device 20 is an expensive disk drive such as an FC (Fibre Channel) disk or an inexpensive disk drive such as a FATA (Fibre Attached Technology Adapted) disk, SATA (Serial AT Attachment) disk, or optical disk drive. Semiconductor memory, such as flash memory, may be used in place of the disk devices 20. One or more logical volumes (hereinafter called 'logical volumes') VOL are defined for a storage area provided by one or more disk devices 20. Data is read from or written in these logical volumes VOL by the host system 2 in units of blocks of a predetermined size.

The respective logical volumes VOL are each assigned unique identifiers (LUN: Logical Unit Numbers). In this embodiment, the input and output of data is performed by designating an address - a combination of an identifier and a unique number assigned to each block (LBA: Logical Block Address).

Examples of the attributes of the logical volumes VOL created in the primary-side storage apparatus 4 include primary-side volumes and journal volumes. The primary-side volumes are volumes the users read/write data from/to. The journal volumes are volumes for storing journal - update history information for the primary-side volumes - and consist of the data written in the primary-side volumes and management information such as the addresses of the sites in the primary-side volumes where the data is written, and the times the data was written.

The controller 22 is configured from a plurality of channel adapters 23, connecting unit 24, shared memory 25, cache memory 26, a plurality of disk adapters 27 and a management terminal 28.

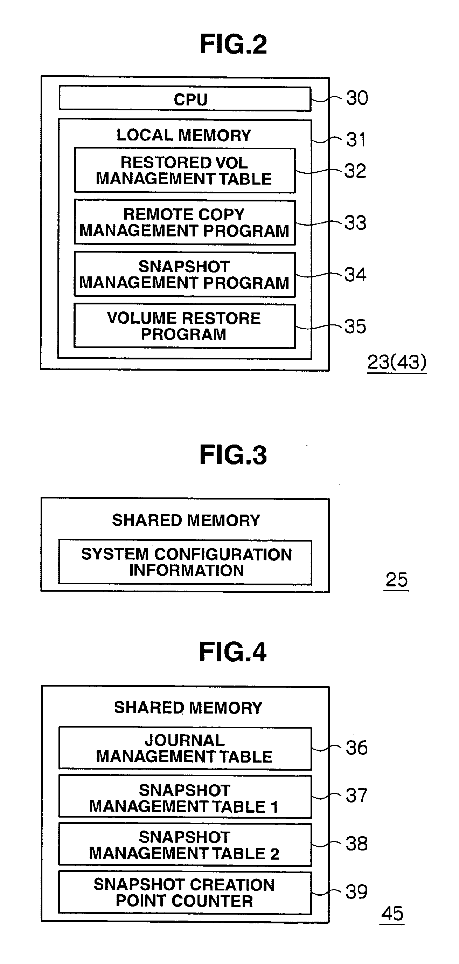

As shown in Fig. 2, each channel adapter 23 is configured as a microcomputer including a CPU30, local memory 31, as well as a port (not shown in the drawing) for connection to the network 3. The local memory 31 stores a restored volume management table 32, remote copy management program 33, snapshot management program 34 and volume restore program 35 (which will be described later). The channel adapter 23 interprets various commands sent from the host system 2 and executes the required processing. The port in each channel adapter 23 is assigned a network address (e.g., IP address or WWN) for identifying itself so that each channel adapter 13 can individually serve as a NAS (Network Attached Storage).

The connecting unit 24 is connected to the channel adapters 23, shared memory 25, cache memory 26, and disk adapters 27. Transmission of data and commands between the channel adapters 23, shared memory 25, cache memory 26 and disk adapters 27 is performed via this connecting unit 24. The connecting unit 24 is configured from a bus or a switch such as a ultrahigh-speed crossbar switch, which transmits data by high-speed switching.

The shared memory 25 is memory shared by the channel adapters 23 and disk adapters 27. As shown in FIG. 3, it is mainly used for storing system configuration information, as well as commands from the host system 2.

The cache memory 26 is also memory shared by the channel adapters 23 and disk adapters 27. It is mainly used for temporarily storing the data input to/output from the primary-side storage apparatus 4.

Each disk adapter 27 is configured as a micro computer system having a CPU and memory and serves as an interface for controlling protocols when communicating with the relevant disk device 20. These disk adapters 27 are connected to the corresponding disk devices 20 via, e.g., a Fibre Channel cable and transmit and receive data to and from them according to Fibre Channel Protocol.

The management terminal 28 is a computer for controlling the overall operations of the primary-side storage apparatus 4 and is configured from, e.g., a laptop personal computer. It is connected to the respective channel adapters 23 and disk adapters 27 via the LAN 29. It monitors the occurrence of failures in the primary-side storage apparatus 4 and, when a failure occurs, it performs processing to notify a system administrator of that fact.

The secondary-side storage apparatus 5 is structured the same way as the primary-side storage apparatus 4 and has: a disk device unit 41 consisting of a plurality of disk devices 40; and a controller 42 that controls the respective disk devices 40.

An explanation for the disk devices 40 is omitted because they have the same structure as the disk devices 20 in the primary-side storage apparatus 4. Just as the primary-side storage apparatus 4, one or more logical volumes VOL are defined for a storage area provided by the disk devices 40. Examples of the attributes of these logical volumes VOL include journal volumes, secondary-side volumes and difference volumes.

A journal volume is a volume for storing journal sent from the primary-side storage apparatus 4. A secondary-side volume is a backup volume for the data written in a primary-side volume, i.e., data written in a primary-side volume and included in journal sent from the primary-side storage apparatus 4 is copied to the secondary-side volume. The difference volume is a volume for storing the difference data for snapshots of a secondary-side volume, which are obtained at predetermined timings, and will be described later.

The controller 42 is configured from a plurality of channel adapters 43, connecting unit 44, shared memory 45, cache memory 46, a plurality of disk adapters 47, and management terminal 48. These channel adapters 43, the connecting unit 44, shared memory 45, cache memory 46, disk adapters 47 and management terminal 48 have the same functions as those in the primary-side storage apparatus 4, so their explanations will be omitted.

Incidentally, in the secondary-side storage apparatus 5, as shown in Fig. 4, the shared memory 45 stores a journal management table 36, first snapshot management table 37, and second snapshot management table 38 (which will be described later).

### (2) Storage System Data Management Method

### (2-1) Outline of Storage System Data Management Method

The data management method for the storage system 1 will be explained.

In the storage system 1 according to this embodiment, the data written in a primary-side volume is sent to the secondary-side storage apparatus 5 in order and copied to a secondary-side volume, using the remote copy function of the primary-side storage apparatus 4 and secondary-side storage apparatus 5. Also, in the secondary-side storage apparatus 5, snapshots of the secondary-side volume are created at regular intervals or irregular intervals - in units of seconds or minutes.

When the secondary-side storage apparatus 5 receives, from the host system 2 and via the primary-side storage apparatus 4, a primary-side volume restoration request with a designated restoration point-in-time for the primary-side volume (hereinafter called 'requested restoration point-in-time'), the secondary-side storage apparatus 5 restores the primary-side volume to its state as of the requested restoration point-in-time designated by the host system 2 using the snapshots of the secondary-side volume that have been created so far.

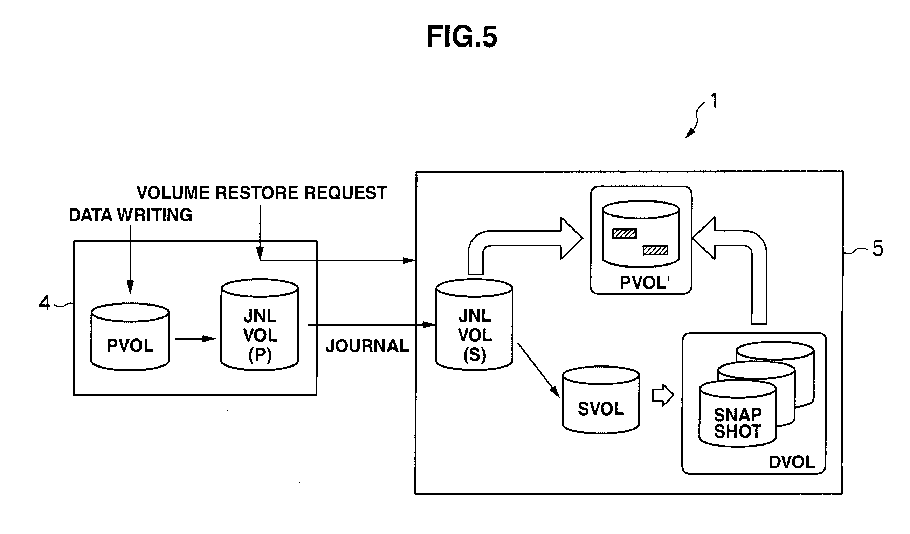

Actually, in this storage system 1, when a data write request and write target data are sent from the host system 2, the relevant channel adapter 23 (Fig. 1) in the primary-side storage apparatus 4 (hereinafter called 'primary-side channel adapter') writes the write target data in a designated address in a primary-side volume ('PVOL') as shown in Fig. 5, and creates journal for the data and stores it in a journal volume in the primary-side storage apparatus 4 (JNLVOL(P); hereinafter called 'primary-side journal volume').

Meanwhile, the relevant channel adapter 43 in the secondary-side storage apparatus 5 (hereinafter called 'secondary-side channel adapter') reads the journal stored in the primary-side journal volume out of synchronization with the host system 2's writing the data in the primary-side volume, and stores it in a journal volume provided in the secondary-side storage apparatus 5 (JNLVOL(S); hereinafter called 'secondary-side journal volume').

Also, the secondary-side channel adapter 43 copies the data included in the respective journal stored in the foregoing secondary-side journal volume to the corresponding addresses in a secondary-side volume (SVOL). Consequently, a copy of the primary-side volume is created in the secondary-side volume.

The secondary-side channel adapter 43 monitors the amount of journal written in the secondary-side journal volume and each time the number exceeds a predetermined threshold value, it creates a snapshot of the secondary-side volume. It also manages the creation times of the snapshots. Each time new data is written in the secondary-side volume after a snapshot of the secondary-side volume is created, the secondary-side channel adapter 43 stores the data that had been written in the secondary-side volume before the new data was written (i.e., data at the time of snapshot creation) in the difference volume (DVOL) as difference data. Accordingly, the snapshots created by the secondary-side channel adapter 43 are stored in the secondary-side volume and difference volume.

After that, when a data restore request is sent from the host system 2 via the primary-side storage apparatus 4, the secondary-side channel adapter 43 searches for, based on the creation times of the respective snapshots, the snapshot that was created before and closest to the designated requested restoration point-in-time (hereinafter called 'most recent snapshot'). The secondary-side channel adapter 43 then restores the primary-side volume (PVOL') to its state as of the designated requested restoration point-in-time using this most recent snapshot and the journal sent from the primary-side storage apparatus 4 during the time between the creation of the most recent snapshot and the designated requested restoration point-in-time.

Incidentally, the remote copy has two types - synchronous and asynchronous. In synchronous remote copy, when data is written in a primary-side volume by the host system 2, this data is immediately transferred to the secondary-side storage apparatus 5 and copied to a secondary-side volume, and when this copy processing is complete, the primary-side storage apparatus 4 reports completion of data writing to the host system 2. In asynchronous remote copy, when the host system 2 writes data in a primary-side volume, the primary-side storage apparatus 4 reports completion of data writing to the host system 2 and, later, at an appropriate time, the secondary-side storage apparatus 5 reads the data from the primary-side volume and writes it in a secondary-side volume. In the storage system 1 according to this embodiment, it is assumed that asynchronous type remote copy has been adopted in the primary-side storage apparatus 4 and secondary-side storage apparatus 5.

### (2-2) Structures of Various Management Tables

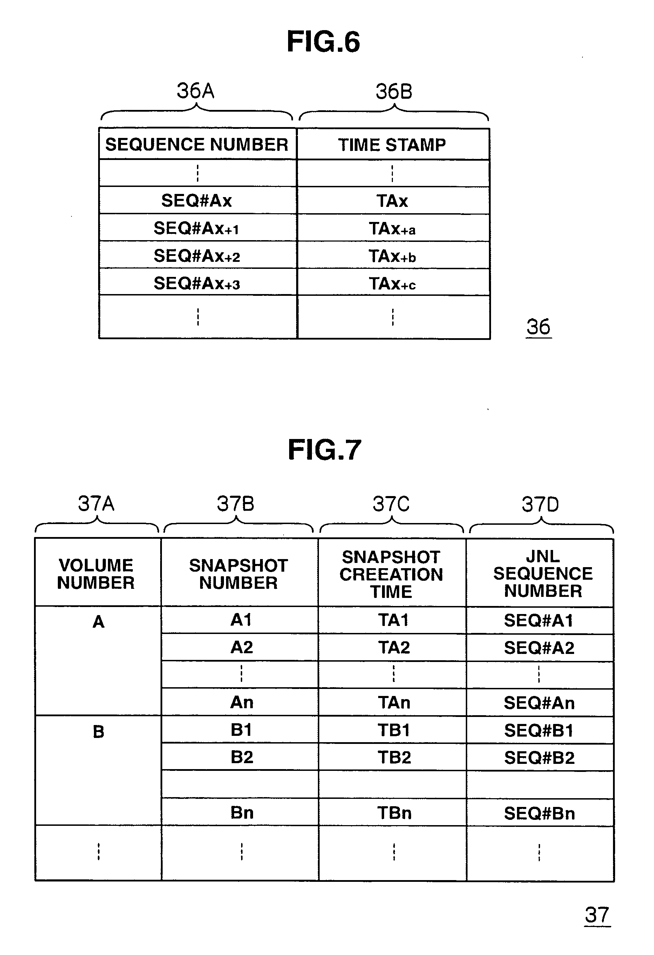

Fig. 6 shows the foregoing journal management table 36 stored in the shared memory 45 (Fig. 1) in the secondary-side storage apparatus 5. This journal management table 36 is a table for managing the creation times of the journal transferred to the secondary-side storage apparatus 5, and consists of a sequence number field 36 A and time stamp field 36B.

The sequence number field 36A stores the sequence numbers of the respective pieces of journal the secondary-side storage apparatus 5 received, in order. These sequence numbers are serial numbers, each given to journal every time the primary-side channel adapter 23 in the primary-side storage apparatus 4 creates it. Each time the channel adapter 23 in the secondary-side storage apparatus 5 receives journal sent from the primary-side storage apparatus 4, it reads the sequence number stored in the journal and stores it in the sequence number field 36A.

The time stamp field 36B stores the journal creation times, which are stored in the journal as time stamps. Accordingly, in the example of Fig. 6, it can be seen that the journal data assigned the sequence number 'SEQ#A1' and received by the secondary-side storage apparatus 5 was created at the time 'TAx.'

Fig. 7 shows a first snapshot management table 37 stored in the shared memory 25 in the secondary-side storage apparatus 5. This is a table for managing the creation times of the snapshots, and consists of a volume number field 37A, snapshot number field 37B, snapshot creation time field 37C, and journal sequence number field 37D.

Of these fields, the volume number field 37A stores the identification numbers (e.g., LUNs) of the respective secondary-side volumes in the secondary-side storage apparatus 5 that are registered in the first snapshot management table 37. The snapshot number field 37B stores the identification numbers of the respective snapshots (hereinafter called 'snapshot numbers') created for these secondary-side volumes. The snapshot creation time field 37C stores the creation times of the corresponding snapshots. The journal sequence at the time when the corresponding snapshots were created.

For example, in the example shown in Fig. 7, for the secondary-side volume with the identification number 'A,' 'n' number of snapshots have been created with identification numbers being 'A1,' 'A2,' ...and 'AN'; the creation times of these snapshots are 'TA1,' 'TA2,' ...and 'TAN' respectively; and the sequence numbers of the latest journal at the time when the these snapshots were created are 'SEQ#A1,' 'SEQ#A2,' ... and 'SEQ#AN.'

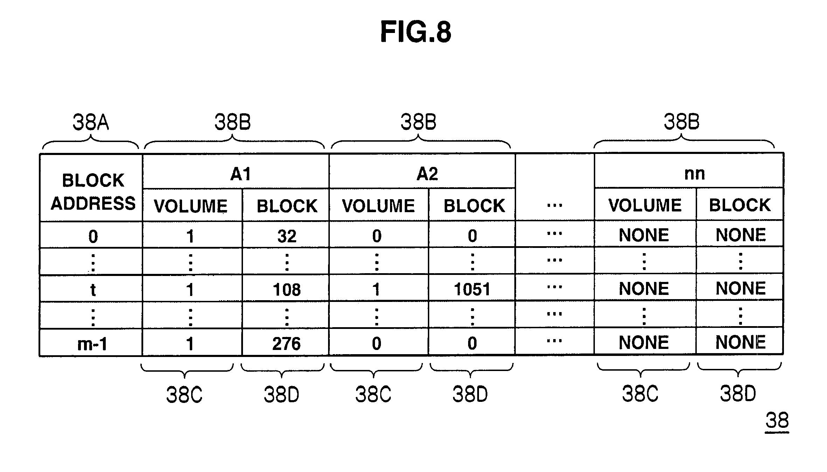

Fig. 8 shows a second snapshot management table 38 stored in the shared memory 45 in the secondary-side storage apparatus 5. This second snapshot management table 38 is a table for collectively managing a plurality of snapshots created sequentially in the secondary-side storage apparatus 5, and consists of a block address field 38A and a plurality of snapshot management fields 38B, corresponding to the respective blocks in the secondary-side volumes.

The block address field 38A stores the block addresses of the secondary-side volumes. For example, LBAs can be used as the block addresses.

The snapshot management fields 38B are provided with the same number as the snapshots that can be stored in the secondary-side storage apparatus 5, each snapshot management field consisting of a volume field 38C and block field 38D.

In each volume field 38C, '0' is entered when a relevant snapshot is created and, after that, when the data in the corresponding block in the relevant primary side volume is updated and the data before the update is saved in the difference volume, '1' is entered (i.e., '0' is updated to '1').

In each block field 38D, '0' is entered when a relevant snapshot is created and, after that, when the data in the corresponding block in the relevant primary-side volume is updated and the data before the update is saved in the difference volume, the address of the block in the difference volume where the data is saved is stored.

In the example shown in Fig. 8, it can be seen that, for the snapshot with the snapshot number 'A2', the data stored in the block with the block address 't' in the secondary-side volume was updated after the creation of the snapshot (the value in the volume field 38C is '1') and that the data before the update is saved in the block with the block address '1051' in the difference volume (the value in the block field 38D is '1051').

Also, for the snapshot with the snapshot number 'A2', the data stored in the block with the block address 'm-1' in the secondary-side volume has not been updated after the creation of the snapshot (the value in the volume field 38C is '0') and that the data at the creation time of the snapshot still remains in the block with the block address 'm-1' in the secondary-side volume.

Accordingly, in the example shown in Fig. 8, the snapshot with the snapshot number 'A2' can be obtained by, with regard to the blocks (including the block with the block address 't') whose values in the volume field 38C in the first snapshot management table 38 are '1,' referring to the data stored in the blocks having the corresponding block address in the difference volume; and by, with regard to the blocks (including the blocks with the block address '0' and 'm-1') whose values in the volume field 38C are '0,' referring to the data stored in the blocks having the corresponding block addresses in the secondary-side volume

### (2-3) Specific Content of Processing by CPU in Secondary-side Channel Adapter

### (2-3-1) Snapshot Creation Processing

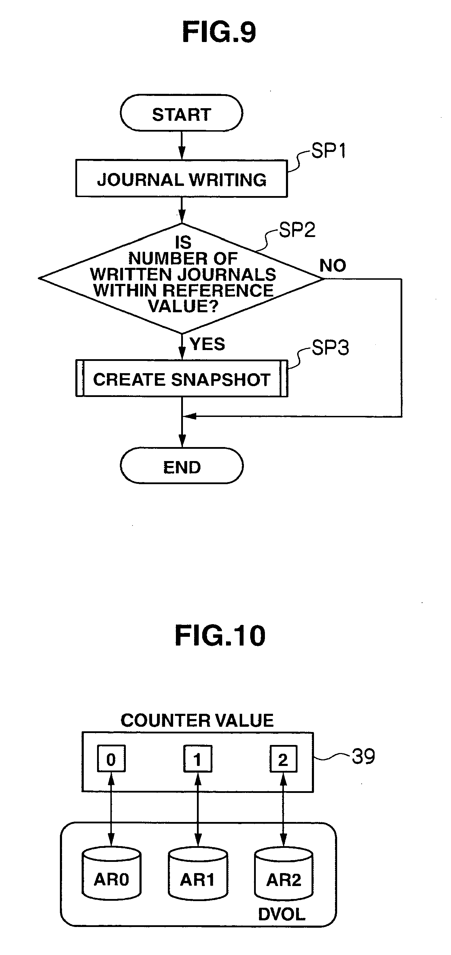

Fig. 9 is a flowchart showing the specific content of the processing performed in relation to snapshot creation by the CPU 30 (Fig. 2) in the secondary-side channel adapter 43 (hereinafter called 'secondary-side channel adapter CPU'). This secondary-side channel adapter CPU 30 creates a snapshot according to the amount of journal written in the journal volume, based on the snapshot management program 34 stored in the local memory 31 (Fig. 21) and in accordance with the processing routine shown in Fig. 9.

More Specifically, when the secondary-side channel adapter CPU 30 reads journal from a primary-side volume in the primary-side storage apparatus 4, it starts the snapshot creation processing, where it first stores the journal in a journal volume (SP1).

The secondary-side channel adapter CPU 30 then judges whether the amount of data written in the journal volume since the initial state, where no journal has been accumulated in the journal volume or since the creation of the last snapshot, is below a reference value (e.g., within 10% of the capacity of the journal volume) (SP2).

If the judgment is negative, the secondary-side channel adapter CPU 30 terminates the snapshot creation processing. Meanwhile, if the judgment is positive, the secondary-side channel adapter CPU 30 creates a snapshot; registers the creation time of the snapshot as well as the sequence number of the latest journal at this moment in the snapshot management table 36 (SP3); and terminates the snapshot creation processing. (2-3-2) Snapshot Creation and Disposal Processing

Where snapshots are created in order in accordance with the amount of journal written in journal volumes as described above, because the capacity of the difference volume is limited, it is impossible to maintain all the created snapshots forever.

In the storage system 1 according to this embodiment, the shared memory 45 in the secondary-side storage apparatus 5 has a snapshot creation point counter 39 (Fig. 4), for which, the maximum count value is the number of snapshots that can be created in the secondary-side storage apparatus 5 (hereinafter called 'maximum snapshot number'). Also, as shown in Fig. 10, the difference volume is sectioned into a plurality of areas (three areas in Fig. 10) - AR0, AR1, and AR2 - each associated with the count values of the counter 39 respectively.

In the storage system 1, each time a snapshot is created in the secondary-side storage apparatus 5, the snapshot is assigned an area - AR0, AR1 or AR2 - in the difference volume that corresponds to the current count value of the snapshot creation point counter 39 and, after that, the difference data for that snapshot is stored in the area AR0, AR1 or AR2 in the difference volume that is assigned to the snapshot.

Also, in the storage system 1, when the count value of the snapshot creation point counter 39 reaches the maximum snapshot number, the count value is reset to '0' and, after that, each time a snapshot is assigned an area AR0, AR1 or AR2 in the difference volume, the count value increases by one.

Thus, in the storage system 1, once the number of snapshots reaches the maximum snapshot number, each time a snapshot is created, the oldest snapshot is disposed of, allowing continued creation of snapshots while using the areas AR0 to AR2 in the difference volume cyclically.

Incidentally, just as the difference volume, the capacity of the journal volume is also limited; so the obtained journal cannot be maintained forever.

In the storage system 1, when the oldest snapshot is disposed of as mentioned above, the journal that have been obtained during the time between the acquisition of the oldest snapshot and that of the next oldest snapshot are disposed of by being overwritten with new journal. In this case, once the oldest snapshot is disposed of, restoration of the volume based on that disposed-of snapshot is impossible and so there is no problem with disposing of the journal obtained during the time between the acquisition of the disposed-of oldest snapshot and that of the next snapshot.

Accordingly, in the storage system 1, when a snapshot is disposed of, unnecessary journal are also disposed of, and the journal volume can be used efficiently.

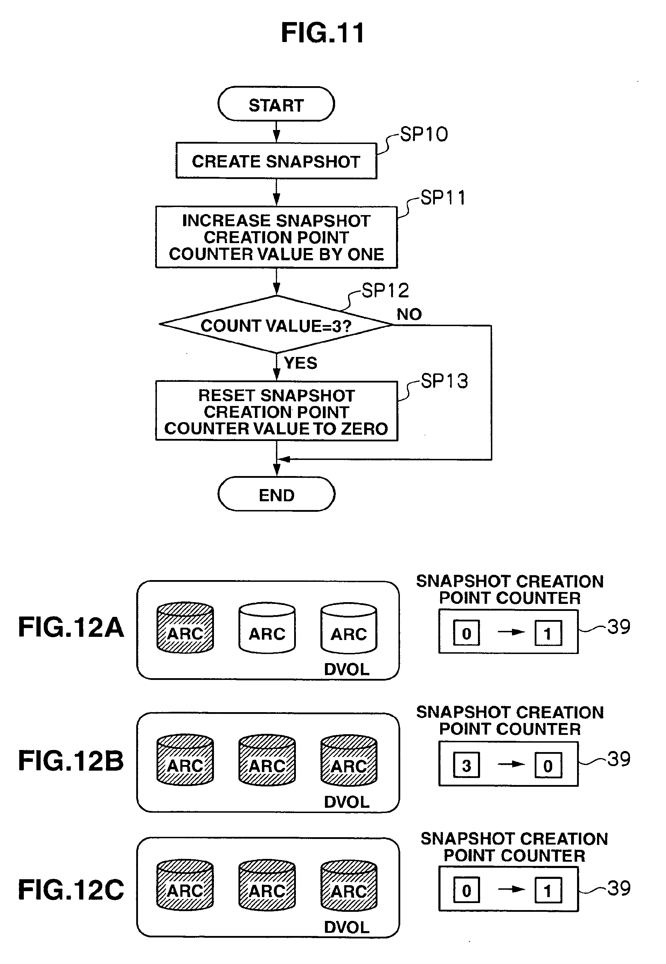

Fig. 11 is a flowchart showing the content of the processing performed relevant to the foregoing snapshot disposal processing by the secondary-side channel adapter CPU 30. When the secondary-side channel adapter CPU 30 proceeds to step SP3 of the snapshot creation processing described in relation to Fig. 9, it disposes of, as necessary, a snapshot obtained in the past according to the processing routine shown in Fig. 11 based on the snapshot management program 34 (Fig. 4).

In other words, when the secondary-side channel adapter CPU 30 proceeds to step SP3 of the snapshot creation processing, it starts the snapshot disposal processing, where it first creates a snapshot of the current primary volume PVOL (SP10).

Subsequently, the secondary-side channel adapter CPU 30 increases the count value of the snapshot creation point counter 39 by one (SP11) and judges whether the count value of the counter 39 has reached the maximum snapshot number (SP12).

If the judgment is negative, the secondary-side channel adapter CPU 30 terminates the snapshot disposal and creation processing. Meanwhile, if the judgment is positive, it resets the count value of the snapshot creation point counter 39 to '0' (SP13) and terminates the snapshot creation and disposal processing.

As a result of the foregoing snapshot creation and disposal processing, if the maximum snapshot number is set to three, for example, the count value of the snapshot creation point counter 39 is '0' in the initial state where the first snapshot is created, so the first snapshot is assigned the area AR0 in the difference volume, which is associated with the count value '0' of the snapshot creation point counter 39. Also, the count value of the counter 39 increases by one as shown in Fig. 12A.

After that, when the count value of the snapshot creation point counter 39 is '2,' when another snapshot is created, the snapshot is assigned the area AR2 in the difference volume associated with the maximum snapshot number '3' and then the count value of the counter 39 is reset to '0' as shown in Fig. 12 (B).

Then, when still another snapshot is created, as shown in Fig. 12 (C), the snapshot is assigned the area AR0 in the difference volume associated with the count value '0' of the snapshot creation point counter 39 and then the count value of the counter 39 increases by one to '1.' After that, the same steps (Fig. 12A to Fig. 12C) are repeated. (2-3-3) Volume Restore Processing

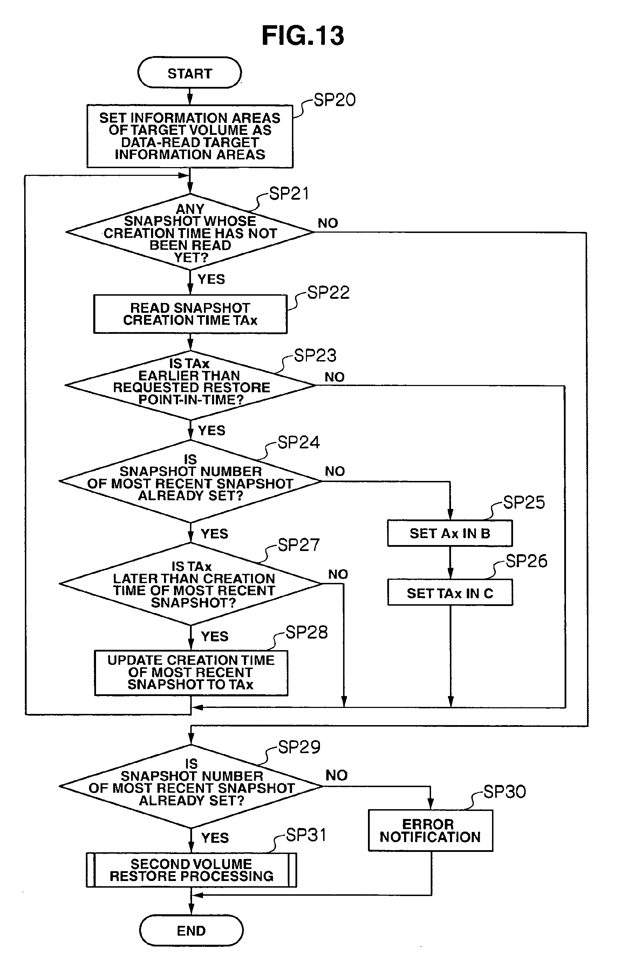

Fig. 13 is a flowchart showing the content of processing performed by the secondary-side channel adapter CPU 30 in relation to the volume restore processing included in the data management method according to this embodiment described above in relation to Fig. 5. The secondary-side channel adapter CPU 30 restores a primary-side volume to its state as of the time designated by the host system 2 (hereinafter called 'requested restoration point-in-time') according to the processing routine shown in Fig. 13.

In other words, when the secondary-side channel adapter CPU 30 receives, from the host system 2, a primary-side volume restoration request with a designated requested restoration point-in-time, it starts the first volume restore processing shown in Fig. 13, where it first sets the information areas in the first snapshot management table 37 where the information for the current target primary-side volume is stored as data-read target information areas (SP20). More specifically, where the primary-side volumes with the volume numbers 'A,' 'B,' ...are registered in the first snapshot management table 37 as shown in Fig. 7, in order to restore the data in the primary-side volume with the volume number 'A,' the fields related to the snapshots of the primary-side volume 'A' in the first snapshot management table 37 (i.e., the snapshots with the snapshot numbers 'A1' to 'An') are set as data-read target information areas.

Subsequently, the secondary-side channel adapter CPU 30 judges whether there is any snapshot whose creation time has not been read from the first snapshot management table 37, among the snapshots included in the data-reading target information areas in the first snapshot management table 37 (SP21).

If the judgment is positive, the secondary-side channel adapter CPU 30 selects one snapshot whose creation time has not been read, from among the snapshots included in the data-reading target information areas; and reads that snapshot's creation time from the first snapshot management table 37 (SP22).

After that, the secondary-side channel adapter CPU 30 judges whether the creation time is earlier than the requested restoration point-in-time designated by the host system 2 (SP23). If the judgment is negative, the secondary-side channel adapter CPU 30 returns to step SP21.

Meanwhile, if the judgment is positive, the secondary-side channel adapter CPU 30 judges whether the local memory 31 (Fig. 2) stores the snapshot number of the snapshot judged to have been obtained before and closest to the requested restoration point-in-time (hereinafter called 'most recent snapshot') (SP24).

If the judgment is negative, the secondary-side channel adapter CPU 30 sets the snapshot number of the current target snapshot as the snapshot number (Ax) of the most recent snapshot and stores it in the local memory 31 (SP25).

Also, the secondary-side channel adapter CPU 30 reads the creation time of the current target snapshot from the first snapshot management table 37; and sets it as the creation time of the most recent snapshot (hereinafter called 'most recent snapshot creation time (TAx)) and stores it in the local memory 31 (SP26). Then, the secondary-side channel adapter 30 (43→30) returns to step SP21.

Meanwhile, if the judgment in step S24 is positive, the secondary-side channel adapter CPU 30 judges whether the snapshot creation time read from the first snapshot management table 37 in step S22 is later than the most recent snapshot creation time stored in the local memory 31 at that time (SP2 7).

If the judgment is negative, the secondary-side channel adapter CPU 30 returns to step SP21. However, if the judgment is positive, it updates the most recent snapshot creation time (TAx) stored in the local memory 31 to the snapshot creation time read from the first snapshot management table 37 in step SP22 (SP28).

The secondary-side channel adapter CPU 30 then returns to step SP21 and repeats the same steps (SP21 to SP28) while changing the target snapshot in order. By repeating these steps, the snapshot number and creation time for the truly most-recent snapshot (most recent snapshot creation time) created before and closest to the requested restoration point-in-time, from among the snapshots registered in the first snapshot management table 37, can be stored in the local memory 31.

After that, when the secondary-side channel adapter CPU 30 performs the same steps (SP21 to SP28) for all the snapshots registered in the first snapshot management table 37 and the judgment in step SP21 is negative, it judges whether the snapshot number of the most recent snapshot is stored in the local memory 31 (SP29).

If the judgment is negative, it means that no recent snapshot was detected. This happens, e.g., when the host system 2 makes a volume restoration request but no snapshot has been formed yet. Here, the secondary-side channel adapter CPU 30 transmits a command suitable for this situation to the host system 2 so that an error message indicating that the restoration of the target volume to its state as of the requested restoration point-in-time is impossible is displayed on the display of the host system 2 (SP30) and terminates the first volume restore processing.

Meanwhile, if the judgment in step SP29 is positive, it means that the most recent snapshot was detected. Here, the secondary-side channel adapter CPU 30 restores the primary-side volume to its state as of the requested restoration point-in-time using the most recent snapshot (SP31) and terminates the first volume restore processing. Incidentally, the restored data in the primary-side volume as of the requested restoration point-in-time is presented to the host system 2 via the primary-side storage apparatus 4.

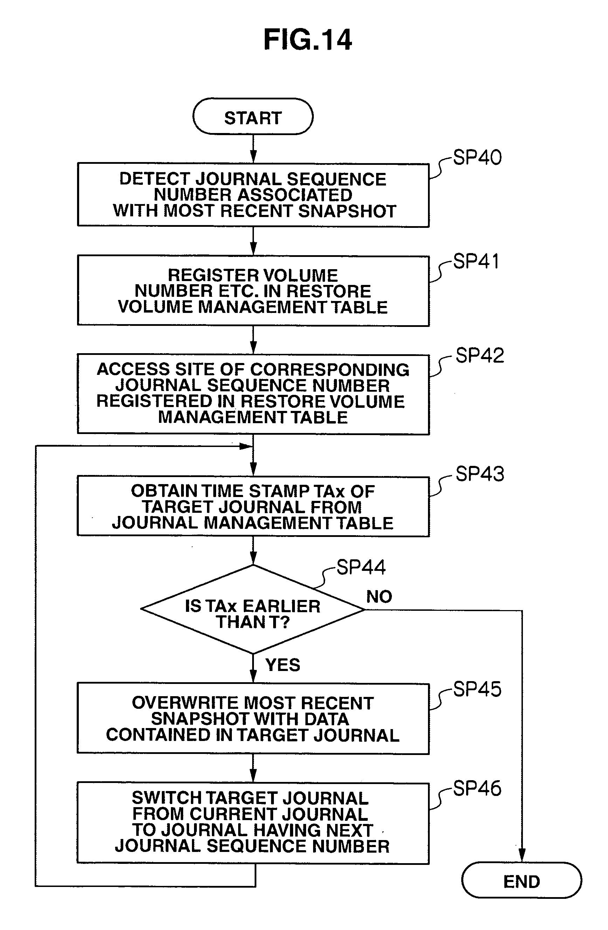

Fig. 14 is a flowchart showing the specific content of the volume restore processing performed in step SP31 in the first volume restore processing (Fig. 13). When the secondary-side channel adapter CPU 30 detects the snapshot number of the most recent snapshot that was created before and closest to the requested restoration point-in-time designated by the host system 2 during the volume restore processing, it restores, based on the volume restore program 35, the primary-side volume to its state as of the requested restoration point-in-time using the most recent snapshot.

In other words, when the secondary-side channel adapter CPU 30 proceeds to step SP31 in the first volume restore processing (Fig. 13), it starts the second volume restore processing shown in Fig. 14, where it first detects the journal sequence number associated with the most recent snapshot number in the first snapshot management table 37(SP40).

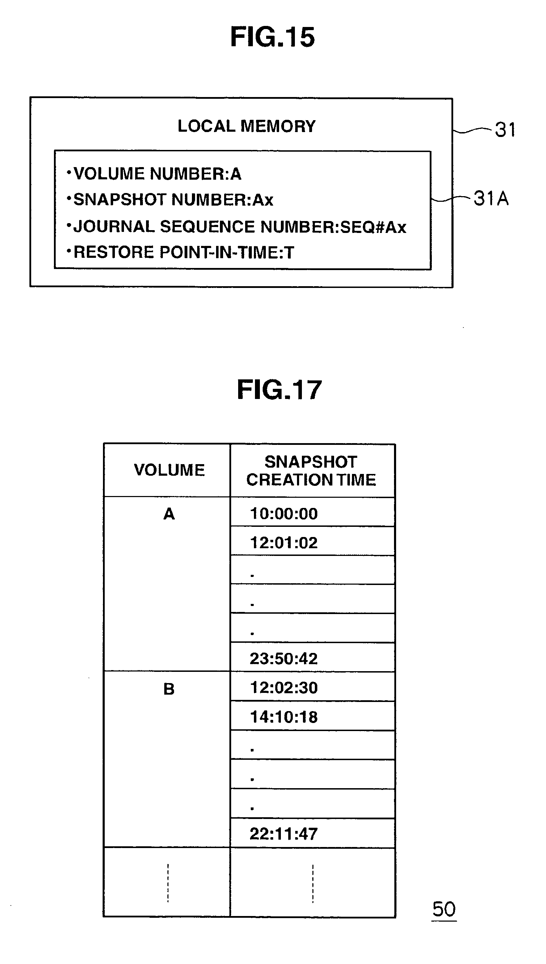

The secondary-side channel adapter CPU 30 then stores, as shown in Fig. 15, the volume number of the current target primary-side volume; the snapshot number of the truly most-recent snapshot detected in the steps SP20 to SP29 in the first volume restore processing (Fig. 13); the journal sequence number detected in step SP40; and the requested restoration point-in-time designated by the host system 2, in a restored volume management table 32 provided in the local memory 31 in advance (SP41).

The secondary-side channel adapter CPU 10 then accesses the site of the journal sequence number registered in step SP41 in the restored volume management table 32 in the journal management table 36 (SP42) and reads the time stamp of the journal assigned that journal sequence number from the journal management table 36 (SP43).

Subsequently, the secondary-side channel adapter CPU 30 judges whether the creation time of the current target journal (hereinafter called 'target journal') shown by the obtained time stamp is earlier than the requested restoration point-in-time designated by the host system 2 (SP44).

If the judgment is positive, the secondary-side channel adapter CPU 30 overwrites the most recent snapshot with the data contained in the target journal and written in the primary-side volume by the host system 2 (SP45), switches the target journal from the current target journal to the journal with the next journal sequence number (SP46), and returns to step SP43.

The secondary-side channel adapter CPU 30 then repeats the same steps (SP43 to SP46) while changing the target journal to the journal having the next journal sequence number. Accordingly, the pieces of data written in the primary-side volume by the host system 2 and included in the journal created before the requested restoration point-in-time designated by the host system 2 are written over the most recent snapshot in order.

When the secondary-side channel adapter CPU 30 finishes overwriting the most recent snapshot with all the pieces of data contained in the journal created before the requested restoration point-in-time designated by the host system 2 and when the judgment in step SP44 is positive, it terminates the second volume restore processing and returns to the first volume restore processing. (2-4) Allowed restoration time Range Display Function of Storage System

As described in relation to Fig. 11, in the secondary-side storage apparatus 5 where the oldest snapshot is disposed of each time a snapshot is created, it is difficult for the users to know the allowed restoration time range for each primary-side volume.

The storage system 1 according to this embodiment has an allowed restoration time range display function that shows, if requested by a user, the current allowed restoration time range for each primary-side volume.

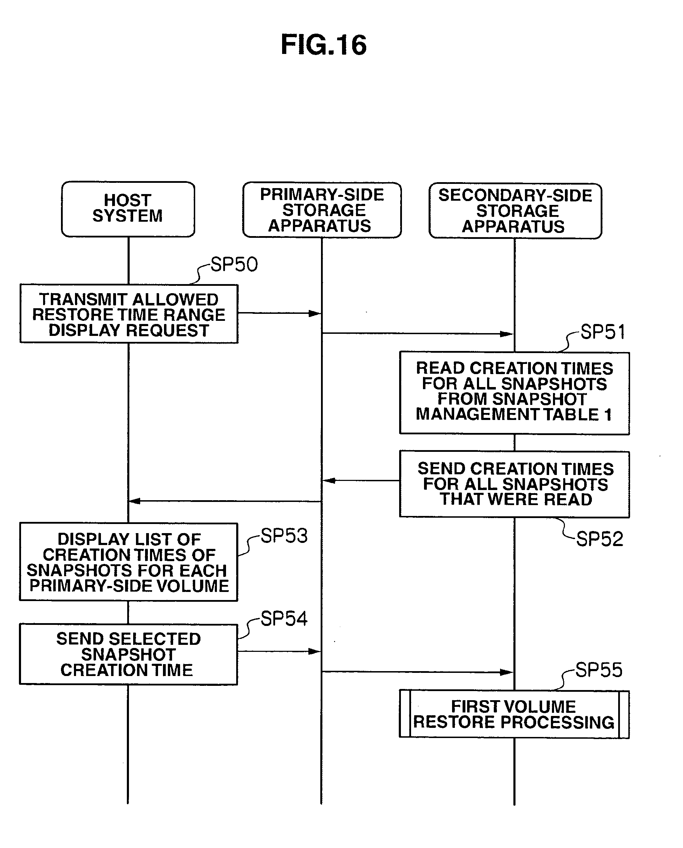

More specifically, in the storage system 1, when the user inputs a command to display the allowed restoration time range for each volume as shown in Fig. 16, the CPU 10 (Fig. 1) in the host system 2 transmits, via the primary-side storage apparatus 4, an allowed restoration time range display request to the secondary-side storage apparatus 5 based on the application software stored in the local memory 11 (Fig. 1) (SP50).

Having received this allowed restoration time range display request, the CPU 30 in the secondary-side channel adapter 43 in the secondary-side storage apparatus 5 reads the creation times for all the snapshots for each primary-side volume from the first snapshot management table 37 (SP51) and informs the host system 2 of the creation times as all-snapshot creation time information via the primary-side storage apparatus 4 (SP52).

Having received the all-snapshot creation time information, the CPU 10 in the host system 2 displays the creation times of all the snapshots for each primary-side volume obtained from the all-snapshot creation time information, on an information output device such as a monitor display (not shown in the drawing) as a list 50 in the format shown in Fig. 17 (hereinafter called 'snapshot creation time list') (SP53).

Here, in the example shown in Fig. 17, for the primary-side volume with the volume number 'A,' the creation time of the currently-existent oldest snapshot is '10:00:00,' therefore, journal created between the time '10:00:00' and the present time (or at least the creation time of the most recent snapshot '23:50:42') remain in the journal volume in the secondary-side storage apparatus 5. Accordingly, the user can know that the primary-side volume can be restored to a state within the time range between '10:00:00' and the present time (or '23:50:42').

The user selects via the host system 2 a desired snapshot creation time, from among the creation times of the snapshots for the target primary-side volume listed in the snapshot creation time list 50, as a requested restoration point-in-time; or the user can designate, for each primary-side volume, a desired point-in-time, from within the time range between the oldest snapshot creation in the snapshot creation time list and the present time (or the creation time for the most recent snapshot), as the requested restoration point-in-time. Here, the host system 2 generates a volume restoration request having the selected or designated point-in-time as the requested restoration point-in-time, and sends this volume restoration request to the secondary-side storage apparatus 5 via the primary-side storage apparatus 4 (SP54).

Then, when the secondary-side storage apparatus 5 receives the foregoing volume restoration request, it performs the first and second volume restore processing described above in relation to Figs. 13 and 14 (SP55).

Accordingly, in the storage system 1, based on the all-snapshot creation time information displayed on the information output device of the host system 2, users can know the allowed restoration time range for each primary-side volume and request restoration of a primary-side volume while designating a time within the time range.

### (3) Effects of this Embodiment

As described above, with the storage system 1 according to this embodiment, the primary-side storage apparatus 4 creates journal - update history information for a primary-side volume - and sends it to the secondary-side storage apparatus 5. Also, in the storage system 1, the secondary-side storage apparatus 5 copies the data written in the primary-side volume and included in the journal sent from the primary-side storage apparatus 4 to secondary-side volumes; creates a snapshot of the secondary-side volume according to the amount of journal written in the secondary-side journal volume; and, after that, restores the primary-side volume to its state as of the designated point-in-time using the stored journal and snapshots, when requested to do so by the host system 2.

Accordingly, in the secondary-side storage apparatus 5 in the storage system 1, because the reference value for the amount of journal written in the secondary-side journal volume is set so that a snapshot is created in units of seconds or minutes, it is possible to shorten the intervals between recovery-allowing points-in-time for the primary volume, and consequently, the time required for executing the primary-side volume restore processing can be reduced. Moreover, in the storage system 1, because the primary-side volume restore processing is performed in the secondary-side storage apparatus 5, any adverse effect this volume restore processing may exert on the input and output of data in the primary-side storage apparatus 4 can be effectively prevented. Therefore, with the storage system 1, it is possible to shorten intervals between restoration points-in-time and to realize data management enabling data restore processing requiring a short period of time.

### (4) Other Embodiments

Incidentally, the foregoing embodiment was explained for the case where this invention is applied in the storage system configured as shown in Fig. 1. However, without being limited to that case, this invention can be applied in various storage systems having different structures.

Also, the foregoing embodiment was explained for the case where, in the secondary-side storage apparatus 5, a snapshot of a secondary-side volume is created according to the amount of journal written in the secondary-side journal volume. However, without limitation to that case, a snapshot of the secondary-side volume may be created regularly, at particular time intervals.

Moreover, the foregoing embodiment was explained for the case where the snapshot creation time list 50 in the format shown in Fig. 17 is displayed based on the all-snapshot creation time information sent from the secondary-side storage apparatus 5 via the primary-side storage apparatus 4 to the host system 2. However, without being limited to that case, various other manners of display may be adopted as the display manner for the creation times of the respective snapshots.

Furthermore, the foregoing embodiment was explained for the case where the primary-side channel adapter 23 serves as a journal creation and transmission unit that creates journal - update history information for a primary-side volume - and transmits it to the secondary-side storage apparatus. However, without being limited to that case, a unit that serves the same purpose may be provided separately from the primary-side channel adapter 23.

Likewise, the foregoing embodiment was explained for the case where, in the secondary-side storage apparatus 5, the secondary-side channel adapter 43 serves as: a data copy unit that copies the data included in journal sent from the primary-side storage apparatus 4 and written in a primary-side volume in a secondary-side volume to a secondary-side volume; a snapshot creation unit that creates a snapshot of the secondary-side volume at irregular intervals; a volume restoration unit that restores the primary-side volume to its state as of the designated point-in-time, when requested to do so by the host system 2, using the journal stored in the secondary-side journal volume and the snapshots stored in the difference volume and secondary-side volume; a snapshot management unit that manages the creation times of the currently-stored snapshots; and a snapshot creation time notification unit that informs the host system 2 of the creation times of the respective snapshots. However, without being limited to that case, a unit that serves the same purpose may be provided separately from the secondary-side channel adapter 43.

Also, the foregoing embodiment was explained for the case where the secondary-side storage apparatus 5 includes both: secondary-side volumes, a difference volume, and shared memory 45 (the second snapshot management table 38) serving as snapshot storage units that store the respective snapshots created by the secondary-side channel adapter 43; and the secondary-side journal volume serving as a journal storage unit that stores the respective journal sent from the primary-side storage apparatus 4. However, without being limited to that case, the secondary-side journal volume may be provided in an external storage apparatus provided separately from the secondary-side storage apparatus 5 so that, when performing the volume restore processing, the secondary-side storage apparatus 5 reads a required journal from the external storage apparatus.

Furthermore, the foregoing embodiment was explained for the case where, in response to a volume restoration request from the host system 2, the secondary-side storage apparatus 5 restores the primary-side volume to its state as of the designated point-in-time. However, without being limited to that case, the storage system 1 may be configured so that the secondary-side storage apparatus 5 restores the primary-side volume to its state as of the designated point-in-time in response to a volume restoration request from external equipment (e.g., a management device on the system administrator side connected to the network 3) other than the host system 2.

## Claims

1. A storage system including a host system serving as a host computer, a first storage apparatus providing a first volume the host system reads/writes data from/to, and a second storage apparatus providing a second volume the data written in the first volume is copied to,
wherein, the first storage apparatus comprises a journal creation and transmission unit that creates journal, which is update history information for the first volume, and transmits it to the second storage apparatus, and
the second storage apparatus comprises:
a data copy unit that copies the data written in the first volume and included in the journal transmitted from the first storage apparatus to the second volume;
a journal-storing unit that stores each journal transmitted from the first storage apparatus;
a snapshot creation unit that creates a snapshot of the second volume at regular intervals or irregular intervals;
a snapshot-storing unit that stores the snapshots created by the snapshot creation unit; and
a volume restoration unit that restores, in response to an external request, the first volume to its state as of the designated point-in-time using the journal stored in the journal-storing unit and the snapshots stored in the snapshot-storing unit.

2. The storage system according to claim 1 wherein the snapshot-storing unit stores the respective pieces of journal in a third volume, and the snapshot creation unit creates the snapshot according to the amount of the journal written in the third volume.

3. The storage system according to c!aim 1 or claim 2,
wherein the second storage apparatus includes a snapshot management unit that manages the creation times of the respective snapshots stored in the snapshot-storing unit; and
the volume restoration unit restores the first volume to its state as of the designated point-in-time using the snapshot created before and closest to the designated point-in-time, based on the creation times of the respective snapshots managed by the snapshot management unit.

4. The storage system according to claim 1 or claim 2,
wherein the second storage apparatus comprises: a snapshot management unit that manages the creation times of the respective snapshots stored in the snapshot-storing unit; and a snapshot creation time notification unit that, in response to a request from the host system, notifies the host system of the creation times of the respective snapshots managed by the snapshot management unit, and
the host system displays the creation times of the respective snapshots stored in the snapshot-storing unit communicated by the second storage apparatus.

5. The storage system according to any one of claims 1 to 4 wherein the snapshot-storing unit stores a predetermined number of snapshots while disposing of the oldest snapshot(s) as necessary.

6. A data management method used for a storage system including a host system serving as a host computer, a first storage apparatus providing a first volume the host system reads/writes data from/to, and a second storage apparatus providing a second volume the data written in the first volume is copied to, the method comprising:
a first step where the first storage apparatus creates journal, which is update history information for the first volume, and transmits it to the second storage apparatus;
a second step where the second storage apparatus copies the data written in the first volume and included in the journal transmitted from the first storage apparatus to the second volume, stores journal, creates a snapshot of the second volume at regular intervals or irregular intervals, and stores the created snapshots; and
a third step where the second storage apparatus restores, in response to an external request, the first volume to its state as of the designated point-in-time using the stored journal and snapshots.

7. The data management method according to claim 6 wherein, in the second step, the respective pieces of journal are stored in a third volume and a snapshot is created according to the amount of the journal written in the third volume.

8. The data management method according to claim 6 or claim 7,
wherein, in the second step, the second storage apparatus manages the creation times of the respective stored snapshots, and
in the third step, the second storage apparatus restores the first volume to its state as of the designated point-in-time using the snapshot created before and closest to the designated point-in-time based on the creation times of the respective snapshots.

9. The data management method according to claim 6 or claim 7,
wherein, in the second step, the second storage apparatus manages the creation times of the respective stored snapshots and notifies, in response to a request from the host system, the host system of the creation times of the respective snapshots, and
the host system displays the creation times of the respective snapshots communicated by the second storage apparatus.

10. The data management method according to any one of claims 6 to 9,
wherein, in the second step, a predetermined number of snapshots are stored while disposing of the oldest snapshot(s) as necessary.
